# FASCICULE DE BREVET EUROPEEN

(11) **EP 2 261 513 B1**
(45) Date de publication et mention de la délivrance du brevet: **06.08.2014**
(21) Numéro de dépôt: 10165014.1
(22) Date de dépôt: 04.06.2010
(51) Int. Cl.: F15B 15/14, B64C 25/20, F16H 25/24

(54) **Actionneur à fonctionnement mécanique et amortissement hydraulique**
Mechanisches Stellglied mit hydraulischer Dämpfung
Mechanically powered hydraulically damped actuator

(30) Priorité: 11.06.2009 FR 0902853
(43) Date de publication de la demande: 15.12.2010
(73) Titulaire: Messier-Bugatti-Dowty, 78140 Vélizy-Villacoublay (FR)
(72) Inventeur: Quenerch'du, Marc, 75020, PARIS (FR); Chaurel, Marc, 91620, NOZAY (FR); Jubert, Xavier, 92100, BOULOGNE BILLANCOURT (FR)
(74) Mandataire: Parzy, Benjamin Alain

(56) Documents cités:
- EP-A1- 1 515 051
- FR-A1- 2 739 428
- GB-A- 2 344 325
- US-A- 3 823 758
- US-A- 4 876 906

## Description

L'invention concerne un actionneur à fonctionnement mécanique et à amortissement hydraulique, particulièrement intéressant pour assurer la manoeuvre d'atterrisseurs d'aéronef entre une position déployée et une position rétractée.

### ARRIERE-PLAN DE L'INVENTION

On connaît des actionneurs hydrauliques de type télescopique comportant un corps définissant une cavité cylindrique et une tige s'étendant au travers d'une extrémité de la cavité en étant solidaire d'un piston monté à coulissement axial dans la cavité de façon à délimiter dans celle-ci deux chambres hydrauliques (voir par exemple le document FR2739428). Il est connu, lors d'un déplacement de la tige, d'organiser un laminage sur la sortie de la chambre dont le fluide est expulsé pour réaliser un amortissement hydraulique. Un tel laminage crée une résistance proportionnelle au carré de la vitesse de déplacement de la tige.

On connaît également des actionneurs électrohydrauliques comportant une pompe électrique qui est agencée pour transvaser du fluide d'une chambre à l'autre de l'actionneur. Il est également possible d'organiser un amortissement en laminant le fluide expulsé de l'une des chambres lors du mouvement de la tige. Un tel actionneur n'est cependant pas susceptible d'un fonctionnement en secours dans laquelle la tige est entraînée par la charge à laquelle elle est attelée, à moins que la pompe ne soit réversible et puisse être libérée.

On connaît par ailleurs des actionneurs mécaniques comportant une vis s'étendant à l'intérieur de la tige pour coopérer avec un écrou solidaire de la tige, la vis étant entraînée en rotation par un moteur dont la rotation provoque le déplacement axial de la tige. Dans de tels actionneurs, l'amortissement peut être assuré en organisant une résistance, par exemple de type frictionnelle ou électromagnétique, au déplacement de la tige. Cependant, le premier type de résistance est essentiellement indépendant de la vitesse de déplacement de la tige, tandis que le deuxième type de résistance est assez difficile à organiser et est en général fonction de la vitesse de déplacement de la tige, ce qui peut se révéler insuffisant dans certaines applications. En outre, ces amortissements posent de nombreux problèmes en service, tels que l'usure ou le manque de fiabilité.

### OBJET DE L'INVENTION

L'invention vise à proposer un actionneur à actionnement mécanique présentant un amortissement simple et fiable.

### BREVE DESCRIPTION DE L'INVENTION

En vue de la réalisation de ce but, on propose un actionneur selon la revendication 1 et des procédés selon les revendications 5 et 7.

Ainsi, lors du fonctionnement en mode mécanique, du fluide est expulsé d'une des chambres pour retourner vers l'autre via la conduite, en étant laminé, au moins pour un sens de déplacement, ce qui contribue à amortir toute tendance aux vibrations de la charge attelée à l'actionneur. De plus, lors d'un fonctionnement de secours lors duquel la tige est laissée libre de coulisser en étant entraînée par la charge attelée à l'actionneur, le laminage du fluide ainsi organisé permet d'exercer une force de ralentissement proportionnelle au carré de la vitesse de déplacement de la tige.

On obtient ainsi un fonctionnement en mode mécanique, doublé d'un fonctionnement secours passif, avec à chaque fois un amortissement ou un freinage hydraulique, très fiable et totalement passif.

On remarquera que dans l'actionneur de l'invention, le fluide n'est utilisé que pour amortir ou freiner les mouvements de la tige, et non pour provoquer lesdits mouvements, à la différence des actionneurs à pompe intégrée, ou des actionneurs à double actionnement comme celui du document FR2859770.

Selon un aspect particulièrement avantageux de l'invention, on propose également un procédé de surveillance d'un actionneur selon l'invention, consistant à laisser libre un déplacement de la tige sous la seule action d'une charge attelée à la tige, et vérifier au moins un paramètre de fonctionnement de l'atterrisseur liée à la régulation hydraulique. En particulier, on vérifie le temps mis par la tige pour se déplacer sous l'effet de la charge à l'encontre de la régulation hydraulique ainsi organisée, ce qui permet d'en vérifier le bon fonctionnement.

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'un actionneur selon un premier mode de réalisation de l'invention;
- la figure 2 est une vue en coupe longitudinale d'un actionneur selon un deuxième mode de réalisation de l'invention ;
- la figure 3 est une vue en coupe longitudinale de l'actionneur de la figure 2, illustré alors que le palier de guidage de la tige a été libéré.

### DESCRIPTION DETAILLEE DE L'INVENTION

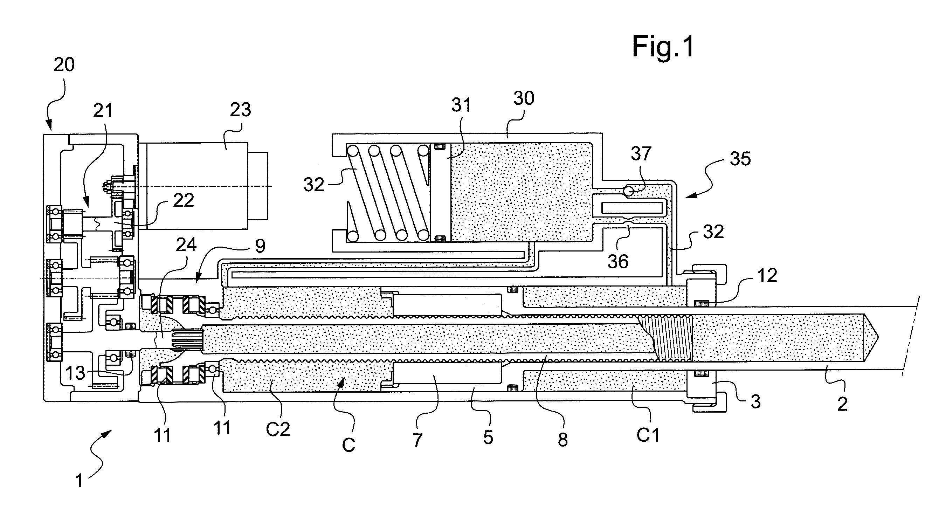

En référence à la figure 1, et conformément à un premier mode de réalisation de l'invention, l'actionneur comprend un corps 1 définissant une cavité C cylindrique s'étendant selon un axe longitudinal. L'actionneur comporte une tige 2 creuse qui s'étend axialement dans la cavité C pour traverser un bouchon 3 formant palier qui ferme la cavité C à l'une de ses extrémités. La tige 2 est terminée dans la cavité C par une extrémité formant palier 5 coulissant dans la cavité C et qui délimite dans la cavité C une chambre C1 (ou chambre annulaire) et une chambre C2 (ou chambre pleine).

Le palier 5 définit intérieurement un logement qui reçoit un écrou 7 monté bloqué dans ledit logement, de sorte que la tige 2 et l'écrou 7 sont rigidement solidaires. Une vis 8 creuse s'étend axialement dans la tige 4 pour coopérer avec l'écrou 7 au moyen d'une liaison de type hélicoïdal. La vis 8 est centrée et guidée en rotation au moyen d'un palier de guidage 9 comportant ici une combinaison d'un roulement à billes 10 et de butées à rouleaux 11.

L'extrémité de la cavité opposée à celle qui est fermée par le bouchon 3 est fermée par un carter 20 accolé enfermant un réducteur 21 ayant un arbre d'entrée 22 entraîné en rotation par un moteur électrique 23, et un arbre de sortie 24 saillant du carter 20 pour pénétrer axialement dans la vis 8 afin d'entraîner celle-ci en rotation au moyen d'une liaison par cannelures. L'arbre de sortie 24 du réducteur est dès lors un arbre d'entraînement.

Un moyen d'antirotation (non représenté) empêche la rotation de la tige 2 par rapport au corps 1. Ce moyen d'antirotation peut être interne à l'actionneur, mais il peut également être externe à l'actionneur, comme dans la situation où la tige et le corps de l'actionneur sont attelés à des charges au moyen de liaisons cinématiques empêchant une rotation relative de la tige vis à vis du corps.

Selon l'invention, les chambres hydrauliques C2 et C1 sont toutes deux remplies de fluide hydraulique et sont reliées à un accumulateur 30 formant une réserve hydraulique dans laquelle une pression minimale est maintenue au moyen d'un piston 31 chargé ici par un ressort 32. Ici, le conduit 32 reliant la chambre C1 à l'accumulateur est doté de moyens de régulation de fluide 35 comportant un restricteur 36 monté en parallèle avec un clapet anti-retour 37 monté pour laisser libre un écoulement de l'accumulateur 30 vers la chambre C1. L'accumulateur 30 sert à fournir ou recevoir un débit différentiel entre les chambres C1 et C2, la différence de débit étant essentiellement due à la différence de section des chambres. Le circuit hydraulique fermé ainsi organisé permet le transvasement de fluide d'une chambre à l'autre lors d'un déplacement de la tige.

On remarquera que l'étanchéité de la cavité C est assurée au moyen d'un premier joint d'étanchéité 12 monté sur le bouchon 3 et portant sur le diamètre extérieur de la tige 2 d'une part, et au moyen d'un deuxième joint d'étanchéité 13 porté par le carter 20 et portant sur le diamètre extérieur de l'arbre de sortie 24. Ce dernier joint réalisé une séparation entre le fluide hydraulique remplissant les chambres C1, C2, et la graisse présente dans le carter 20 du réducteur 21.

Le fonctionnement de l'actionneur est le suivant. Lorsque le moteur 23 est alimenté, il provoque la rotation de l'arbre d'entraînement 24, et, partant, de la vis 8. Celle-ci provoque alors le déplacement linéaire de l'écrou 7, et donc celui de la tige 2.

Pendant ce mouvement, le palier 5 de la tige forme un piston qui repousse le fluide de l'une des chambres hydrauliques pour le transvaser dans l'accumulateur 30, tandis que l'autre des chambres, qui voit son volume augmenter, est rempli par du fluide en provenance de l'accumulateur 30.

Si le moteur 23 est alimenté de façon à provoquer la sortie de la tige 2, le fluide est expulsé de la chambre C1 via la conduite 32. Le fluide ne pouvant passer par le clapet anti-retour 37, est forcé à passer via le restricteur 36, ce qui provoque le laminage du fluide, qui génère une résistance au libre écoulement du fluide, et, partant, une résistance au déplacement de la tige 2. On obtient ainsi un amortissement hydraulique, fiable, simple, et complètement passif, lors d'une sortie de la tige 2 provoquée par le moteur 23.

Si le moteur 23 est alimenté de façon à provoquer la rentrée de la tige 2, le fluide est expulsé de la chambre C2 pour être transféré dans l'accumulateur 30, tandis que du fluide sort de l'accumulateur 30 pour remplir la chambre C1 en passant par le conduit 32. Ce faisant, le fluide passe par le clapet anti-retour 37, en shuntant le restricteur 36, de sorte qu'aucune résistance significative n'est exercée par le fluide au déplacement de la tige dans ce sens.

Enfin, l'actionneur peut fonctionner dans un mode secours en cas de défaut d'alimentation électrique. Dans un tel mode, la tige 2 est entraînée par la charge à laquelle elle est attelée (typiquement un atterrisseur déverrouillé qui est relâché pour descendre sous l'effet de la gravité vers sa position déployée). Lors de ce déplacement, le fluide expulsé de la chambre C1 est forcé à passer par le restricteur 36, ce qui provoque une résistance au mouvement de la tige 2, offrant ainsi une régulation de la vitesse de déplacement de la tige. Pour qu'un tel mode de fonctionnement soit possible, il convient bien sûr que le réducteur 21, le moteur 23, ainsi que la liaison hélicoïdale entre l'écrou 7 et la vis 8 soient réversibles.

Une telle mise en circuit hydraulique fermé des deux chambres offre plusieurs avantages :
- la liaison hélicoïdale vis 2 / écrou 7 ainsi que la liaison glissière palier 5 / corps 1 sont immergées dans le fluide, et sont donc parfaitement lubrifiées. Le risque de grippage de ces liaisons est donc fortement diminué ;
- la présence de fluide dans les chambres interdit toute pénétration d'humidité dans les chambres par effet de pompage de l'air environnant, de sorte que les risques de corrosion cachée dans la cavité sont éliminés ;
- l'amortissement ou le freinage réalisé par laminage est automatique et passif ;
- la dissipation d'énergie par laminage est très simple, et résout les problèmes d'usure ou d'échauffement rencontrés avec les amortissements à friction ou électromagnétiques ;
- il est avantageux de laisser l'actionneur fonctionner à dessein en mode secours, en n'alimentant pas le moteur, pour laisser la tige sortir sous la seule action de la charge, à l'encontre du freinage hydraulique. En mesurant la vitesse de déplacement de la tige il est ainsi possible de vérifier le bon fonctionnement du freinage hydraulique, et détecter tout problème sur celui-ci, et notamment un bouchage du restricteur. Ainsi, bien que purement passif, l'amortissement ou le freinage hydraulique peut néanmoins être testé.

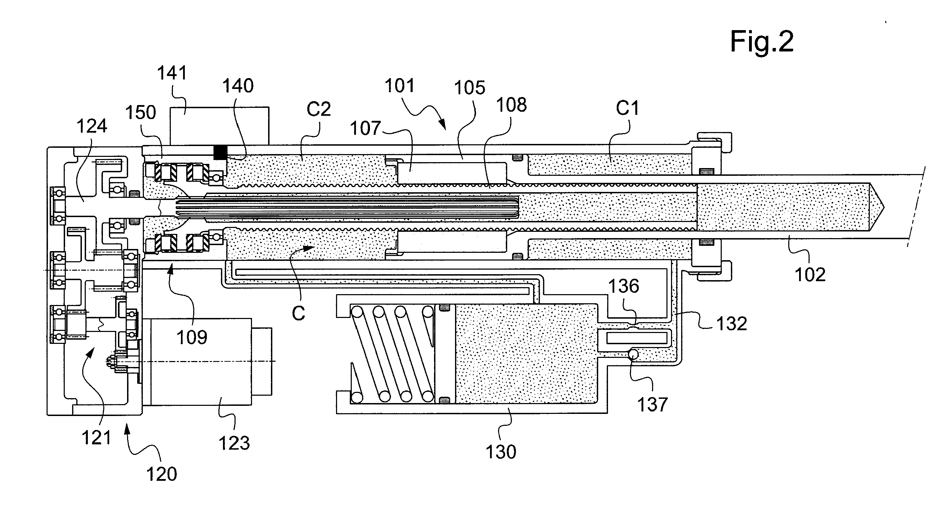

Selon un deuxième mode de réalisation illustré à la figure 2 sur laquelle les éléments communs avec ceux illustrés à la figure 1 ont une référence augmentée d'une centaine, la vis 108 est maintenant associée à un palier de guidage 109 qui peut coulisser dans la cavité C du corps 101. A cet effet, la palier 109 comporte une cage 150 pouvant glisser dans la cavité C.

Le palier 109 est normalement retenu en position de service par un doigt mobile 140 saillant dans la cavité C pour retenir le palier de guidage 109 en position, comme illustré ici. Le doigt 140 est solidaire d'un organe de retenue 141 qui maintient normalement le doigt 140 en saillie dans la cavité.

Cette disposition est particulièrement intéressante lorsque la liaison hélicoïdale entre la vis 108 et l'écrou 107 est choisie irréversible, permettant ainsi la transmission d'efforts plus importants.

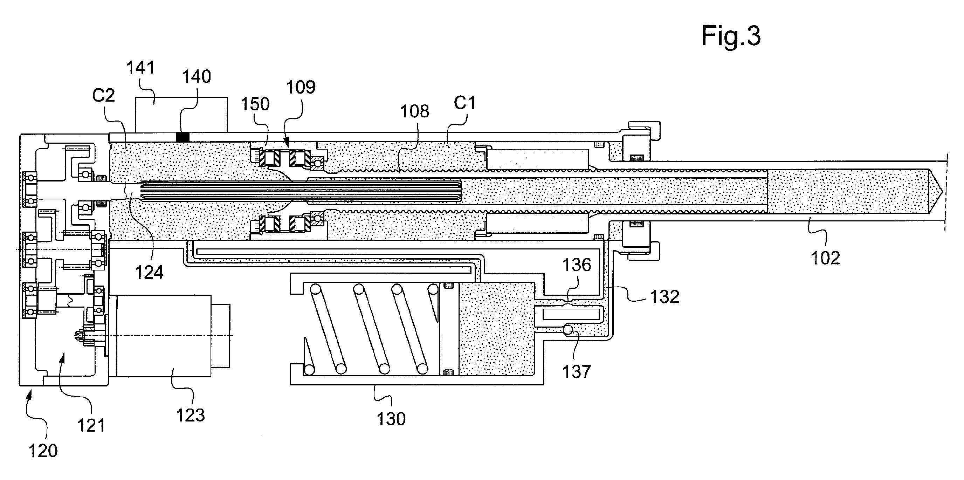

En cas de défaut d'alimentation du moteur électrique 123, il convient, comme illustré à la figure 3, de provoquer la rétraction du doigt 140 de façon à libérer axialement le palier de guidage 109, de sorte que la vis puisse être libérée axialement, ce qui permet à la tige 102 de pouvoir être entraînée et se déplacer sous l'action de la charge attelée à celle-ci.

Une telle libération peut également être mise en oeuvre en cas de blocage mécanique du moteur, du réducteur, ou même de la vis, et plus généralement toute partie mobile, à l'exception bien sûr du coulissement de la tige.

Bien sûr, lors d'un tel déplacement, le fluide expulsé de la chambre C1 est laminé et contribue à freiner la tige et donc réguler sa vitesse de déplacement. Dans son déplacement, la tige 102 entraîne avec elle la vis 108 et le palier de guidage 109.

Pour faire revenir le palier de guidage 109 dans sa position initiale, il suffit, lors qu'il devient de nouveau possible de faire tourner l'arbre d'entraînement 124 du réducteur 123, de faire tourner celle-ci dans le sens inverse. Cette action provoque le retour du palier de guidage 109 à sa position initiale, la tige 108 n'ayant pas bougé. Puis, on actionne le doigt 140 pour qu'il saille de nouveau dans la cavité C et bloque ainsi le palier de guidage en position. La continuation de la rotation de l'arbre d'entraînement 124 provoque alors le déplacement de la tige 108 en sens inverse.

Si de plus, on choisit une liaison hélicoïdale entre la vis 108 et l'écrou 107 réversible, l'actionneur comporte alors deux modes secours alternatifs et redondants, l'un similaire à celui décrit en relation avec la figure 1, et l'autre consistant à libérer le palier de guidage 109 de la tige 108.

Ces actionneurs peuvent faire l'objet de diverses procédures de surveillance ou de test. En particulier, on pourra libérer intentionnellement la tige pour la laisser se déplacer sous l'action de la charge, à l'encontre de la résistance hydraulique opposée par les moyens de régulation. Par exemple, s'agissant d'un actionneur destiné à manoeuvrer un atterrisseur, on pourra déverrouiller l'atterrisseur et le laisser descendre librement sous l'action de la gravité jusqu'à sa position déployée. En mesurant le temps de descente, il est possible de vérifier le bon fonctionnement des moyens de régulation hydraulique selon l'invention, et en particulier détecter un éventuel bouchage (temps de manoeuvre plus élevé qu'attendu) .

Concernant particulièrement l'actionneur présenté à la figure 2, il est possible, quand la tige est en position sortie et maintenue dans cette position par la charge externe, de libérer à dessein le palier de guidage 109 de la vis 108 et de faire tourner le moteur 123. La vis 108 va alors se déplacer, sans que la tige 109 ne bouge. On peut ainsi faire parcourir à la vis un aller-retour, pour vérifier le bon fonctionnement du moteur 123, de l'organe de retenue 141, de la liaison vis/écrou. Une fois cet aller-retour effectué, il convient alors de bloquer le nouveau le palier de guidage 109 en position.

L'invention n'est pas limitée à ce qui vient d'être décrit, mais bien au contraire englobe toute variante entrant dans le cadre de l'invention tel que défini par les revendications.

En particulier, bien que la vis soit dans les deux modes de réalisation illustrés entraînée en rotation au moyen d'un arbre d'entraînement cannelé, ce qui est particulièrement utile dans le deuxième mode de réalisation dans lequel la vis peut se déplacer axialement, on pourra prévoir un entraînement direct de la vis par le moteur, par l'intermédiaire ou non d'un réducteur.

Bien que l'on ait indiqué que le moteur soit monté à demeure sur l'actionneur, il pourra être prévu indépendant de l'actionneur.

Bien que dans les actionneurs illustrés, on a choisi d'isoler du fluide hydraulique le réducteur et le moteur, on pourra choisir au contraire de faire baigner le réducteur et/ou le moteur dans le fluide hydraulique.

Bien que l'on ait indiqué que le moteur était monté à l'extérieur de la cavité, on pourra prévoir un montage dans la cavité. Le moteur est alors baigné par le fluide hydraulique.

Bien que l'on ait indiqué que l'arbre d'entraînement était attelé au moteur électrique via un réducteur, l'arbre d'entraînement pourra être en prise directe avec le moteur.

Bien que l'on ait indiqué que la vis était montée à coulissement sans rotation sur l'arbre d'entraînement au moyen de cannelures, on pourra prévoir plus généralement tout autre type de liaison glissière, comme un doigt ou une clavette solidaire de l'un de ces deux éléments et s'étendant dans une rainure longitudinale de l'autre élément.

Enfin, bien que les moyens de transvasement de fluide d'une chambre à l'autre comprennent ici un accumulateur disposé à l'extérieur de l'actionneur, on pourra disposer cet accumulateur à l'intérieur, par exemple au fond de la tige.

Dans certaines circonstances, notamment si les deux chambres ont sensiblement la même section et qu'on ne craint pas les éventuelles cavitations, on pourra même se passer d'accumulateur.

Les moyens de transvasement de fluide d'une chambre à l'autre peuvent avantageusement se réduire à un passage calibré au travers du palier 5, passage qui peut se réduire à des rainures pratiquées à la surface du palier. Dans ce cas, l'amortissement est présent pour les deux sens de déplacement de la tige.

## Revendications

1. Actionneur comportant un corps (1;101) dans lequel une tige (2;102) est montée pour coulisser, l'actionneur comportant une vis (8;108) s'étendant à l'intérieur de la tige pour coopérer avec un écrou (7;107) solidaire de la tige, la vis étant entraînée en rotation par un moteur (23;123) ; **caractérisé en ce que** la tige est associée à un piston (5;125) qui coulisse dans une cavité (C) du corps pour y définir deux chambres (Cl,C2), celles-ci étant remplies de fluide hydraulique et étant mises en communication par des moyens de transvasement de fluide comprenant :
- un accumulateur (30;130) pour fournir ou recevoir un débit différentiel de fluide entre les chambres ;
- au moins un organe de régulation (36,37;136,137)
**caractérisé en ce que** l'organ de régulation comprend:
- un clapet anti-retour (37;137) monté pour laisser passer le fluide de l'accumulateur vers l'une des deux chambres ; et
- un restricteur (36;136) adapté à laminer du fluide expulsé d'une des chambres, au moins pour un sens de déplacement de la tige (2;102) ce restricteur (36;136) étant monté en parallèle dudit clapet anti-retour (37;137).

2. Actionneur selon la revendication 1, dans lequel l'accumulateur est disposé à l'extérieur du corps et de la tige de l'actionneur, l'accumulateur étant relié aux chambres par des conduits dont au moins un conduit (32;132) porte l'organe de régulation (36,37;136,137).

3. Actionneur selon l'une quelconque des revendications 1 ou 2, comportant un arbre d'entraînement (24;124) qui s'étend axialement à l'intérieur de la vis (8;108) pour entraîner celle-ci en rotation en laissant libre une translation relative de la vis vis-à-vis de l'arbre d'entraînement, le moteur (23 ;123) étant agencé pour entraîner en rotation l'arbre d'entraînement.

4. Actionneur selon la revendication 3, dans lequel la vis est guidée en rotation par un palier de guidage (109) qui est prévu glissant dans la cavité du corps, l'actionneur comportant des moyens de retenue sélective (140) du palier de guidage (109) en position dans la cavité.

5. Procédé de surveillance d'un actionneur selon l'une des revendications précédentes, comprenant les étapes de laisser libre un déplacement de la tige sous la seule action d'une charge attelée à la tige, et de vérifier au moins un paramètre de fonctionnement de l'atterrisseur liée à la régulation hydraulique.

6. Procédé de surveillance selon la revendication 5, dans lequel le paramètre de fonctionnement vérifié est le temps mis par la tige pour se déplacer d'une position donnée à une autre position donnée.

7. Procédé de surveillance d'un actionneur selon la revendication 4, comprenant les étapes de, alors que la tige est en position sortie, libérer le palier de guidage de la vis, alimenter le moteur pour faire faire à la vis un aller-retour, puis bloquer le palier de guidage en position.

## Patentansprüche

1. Aktuator, umfassend ein Gehäuse (1; 101), in dem eine Stange (2; 102) verschiebbar gelagert ist, wobei der Aktuator eine Schraube (8; 108) umfasst, die sich im Inneren der Stange erstreckt, um mit einer mit der Stange verbundenen Mutter (7; 107) zusammenzuwirken, wobei die Schraube von einem Motor (23; 123) drehend angetrieben wird, **dadurch gekennzeichnet, dass** die Stange mit einem Kolben (5; 125) verbunden ist, der in einem Hohlraum (C) des Gehäuses gleitet, um darin zwei Kammern (C1, C2) zu definieren, wobei diese mit Hydraulikfluid gefüllt und durch Fluidumfüllmittel in Verbindung stehen, die umfassen:
- einen Speicher (30; 130) zum Abgeben und Aufnehmen einer Fluiddifferenzmenge zwischen den Kammern,
- mindestens ein Regelungsorgan (36, 37; 136, 137),
**dadurch gekennzeichnet, dass** das Regelungsorgan umfasst:
- ein Rückschlagventil (37; 137), das so angeordnet ist, dass es das Fluid des Speichers in Richtung einer der beiden Kammern durchlässt, und
- eine Drossel (36; 136), die dazu geeignet ist, das von einer der Kammern ausgestoßene Fluid zu drosseln, zumindest in einer Verschiebungsrichtung der Stange (2; 102), wobei diese Drossel (36; 136) parallel zu dem genannten Rückschlagventil (37; 137) angeordnet ist.

2. Aktuator nach Anspruch 1, wobei der Speicher außerhalb des Gehäuses und der Stange des Aktuators angeordnet ist, wobei der Speicher mit den Kammern über Leitungen verbunden ist, von denen mindestens eine Leitung (32; 132) das Regelungsorgan (36, 37; 136, 137) trägt.

3. Aktuator nach einem der Ansprüche 1 oder 2, umfassend eine Antriebswelle (24; 124), die sich axial im Inneren der Schraube (8; 108) erstreckt, um diese drehend anzutreiben, während eine relative Translationsbewegung der Schraube gegenüber der Antriebswelle möglich bleibt, wobei der Motor (23; 123) so ausgebildet ist, dass er die Antriebswelle drehend antreibt.

4. Aktuator nach Anspruch 3, wobei die Schraube durch ein Führungslager (109) drehend geführt ist, das gleitend in dem Hohlraum des Gehäuses vorgesehen ist, wobei der Aktuator Mittel (140) zum selektiven Halten des Führungslagers (109) in Position in dem Hohlraum umfasst.

5. Verfahren zur Überwachung eines Aktuators nach einem der vorhergehenden Ansprüche, umfassend die Schritte des Zulassens einer Verschiebung der Stange unter der alleinigen Wirkung einer an die Stange gekoppelten Last und des Überprüfens mindestens eines Funktionsparameters des Fahrwerks, das mit der hydraulischen Regelung verbunden ist.

6. Überwachungsverfahren nach Anspruch 5, wobei der überprüfte Funktionsparameter die Zeit ist, die von der Stange benötigt wird, um sich von einer gegebenen Position in eine andere gegebene Position zu verschieben.

7. Verfahren zur Überwachung eines Aktuators nach Anspruch 4, umfassend bei ausgefahrener Position der Stange die Schritte des Freigebens des Führungslagers der Schraube, des Speisens des Motors, um eine Hin- und Herbewegung der Schraube zu veranlassen, und des anschließenden Blockierens des Führungslagers in Position.

## Claims

1. An actuator comprising a body (1; 101) in which a rod (2; 102) is mounted to slide, the actuator including a screw (8; 108) extending inside the rod to co-operate with a nut (7; 107) secured to the rod, the screw being driven in rotation by a motor (23; 123); the rod being associated with a piston (5; 125) that slides in a cavity (C) of the body so as to define two chambers (C1, C2) therein, the chambers being filled with hydraulic fluid and being put into communication via fluid transfer means comprising :
- an accumulator (30; 130) for delivering or receiving a differential flow rate of fluid between the chambers;
- at least one regulator member (36, 37; 136, 137);
the actuator being **characterized in that** the regulator member comprises :
- a check valve (37; 137) mounted to pass fluid from the accumulator towards one of the chambers; and
- a constriction (36; 136) adapted to throttle the fluid expelled from one of the chambers, in at least one travel direction of the rod (2, 102), said constriction (36, 136) being connected in parallel with said check valve (37; 137).

2. An actuator according to claim 1, wherein the accumulator is disposed outside the body and the rod of the actuator, the accumulator being connected to the chambers via ducts, at least one of which ducts (32; 132) includes the regulator means (36, 37; 136, 137).

3. An actuator according to any of claims 1 or 2, including a drive shaft (24; 124) extending axially inside the screw (8; 108) for driving the screw in rotation, leaving the screw free to move in translation relative to the drive shaft, the motor (23; 123) being arranged to drive the drive shaft in rotation.

4. An actuator according to claim 3, wherein the screw is guided in rotation by a guide bearing (109) that is mounted slidably in the cavity of the body, the actuator including selective retaining means (140) for retaining the guide bearing (109) in position inside the cavity.

5. A method of monitoring an actuator according to any preceding claim, the method comprising the steps of leaving the rod free to move under the action solely of a load coupled to the rod, and in verifying at least one operating parameter of the load and associated with the hydraulic regulation.

6. A monitoring method according to claim 5, wherein the verified operating parameter is the time taken by the rod to move from one given position to another given position.

7. A method of monitoring an actuator according to claim 4, the method comprising the steps, when the rod is in the extended position, of releasing the guide bearing of the screw, powering the motor to cause the screw to perform a go-and-return trip, and then blocking the guide bearing in position.
